# EUROPÄISCHE PATENTSCHRIFT

(11) **EP 2 766 265 B1**
(45) Veröffentlichungstag und Bekanntmachung des Hinweises auf die Patenterteilung: **16.08.2017**
(21) Anmeldenummer: 12770038.3
(22) Anmeldetag: 21.09.2012
(51) Int. Cl.: B65B 23/14, B65G 47/08, B65G 47/26

(54) **SEPARIERVORRICHTUNG**
SEPARATING DEVICE
DISPOSITIF DE SÉPARATION

(30) Priorität: 13.10.2011 DE 102011084469
(43) Veröffentlichungstag der Anmeldung: 20.08.2014
(73) Patentinhaber: Robert Bosch GmbH, 70442 Stuttgart (DE)
(72) Erfinder: SCHAUMBURG, Uwe, 8222 Beringen (CH)
(86) Internationale Anmeldenummer: PCT/EP2012/068700
(87) Internationale Veröffentlichungsnummer: WO 2013/053584

(56) Entgegenhaltungen:
- EP-A1- 1 982 919
- DE-A1- 4 202 540
- FR-A1- 2 620 689
- GB-A- 1 199 812
- US-A- 3 930 572
- US-A- 4 209 960
- US-A- 4 611 705

## Beschreibung

### Stand der Technik

Aus DE 42 02 540 A1 ist bereits eine Separiervorrichtung mit zumindest einer Portioniereinheit, die dazu vorgesehen ist, Hauptgruppen aus zumindest einer in einer kontinuierlichen Zufuhrbewegung zugeführten Produktkolonne zu beabstanden und die Hauptgruppen aus der zumindest einen zugeführten Produktkolonne durch eine Beschleunigung zumindest im Wesentlichen in Richtung der Zufuhrbewegung zu bilden, wobei die Portioniereinheit dazu vorgesehen ist, in eine Ausgangsposition zur Bildung der nächsten Hauptgruppe zurückzukehren, während die zumindest eine zugeführte Produktkolonne in einer Zufuhrbewegung zugeführt wird, bekannt.

### Offenbarung der Erfindung

Die Erfindung geht aus von einer Separiervorrichtung mit zumindest einer Portioniereinheit, die dazu vorgesehen ist, Hauptgruppen aus zumindest einer in einer kontinuierlichen Zufuhrbewegung zugeführten Produktkolonne zu beabstanden und die Hauptgruppen aus der zumindest einen zugeführten Produktkolonne durch eine Beschleunigung zumindest im Wesentlichen in Richtung der Zufuhrbewegung zu bilden, wobei die Portioniereinheit dazu vorgesehen ist, in eine Ausgangsposition zur Bildung der nächsten Hauptgruppe zurückzukehren, während die zumindest eine zugeführte Produktkolonne in einer Zufuhrbewegung zugeführt wird.

Es wird vorgeschlagen, dass die Separiervorrichtung eine Ablegeeinheit umfasst, die dazu vorgesehen ist, die Hauptgruppen in einer Abtransportbewegung mit einer Bewegungskomponente zumindest im Wesentlichen quer zur Zufuhrbewegung abzutransportieren, wobei die Ablegeeinheit als Schaufel ausgebildet ist, auf der die Hauptgruppe aufliegt, wobei die Ablegeeinheit als zweitteilige Schaufel ausgebildet ist und auf einer Unterseite öffenbar ist. Unter einer "Separiervorrichtung" soll in diesem Zusammenhang insbesondere eine Vorrichtung für eine Verpackungsmaschine verstanden werden, die dazu vorgesehen ist, zu verpackende Produktgruppen aus zumindest einer zugeführten Produktkolonne zu bilden und diese an die Verpackungsmaschine weiterzugeben. Die Separiervorrichtung kann aber auch zur Separierung von Produktkolonnen in anderen, einem Fachmann als sinnvoll erscheinenden Anwendungen eingesetzt werden. Unter einer "Portioniereinheit" soll in diesem Zusammenhang insbesondere eine Einheit verstanden werden, die dazu vorgesehen ist, zumindest eine separierte Produktgruppe aus zumindest einer der Separiervorrichtung zugeführten Produktkolonne zu bilden. Unter einer "Hauptgruppe" sollen in diesem Zusammenhang insbesondere eine Gruppe von Produkten oder mehrere Teilgruppen von Produkten verstanden werden, die in einem Separierzyklus von der Portioniereinheit gebildet werden und/oder die dazu vorgesehen sind, von der Verpackungsmaschine gemeinsam verpackt zu werden. Bevorzugt weist eine Hauptgruppe eine Länge zwischen 45 mm und 350 mm auf. Eine Hauptgruppe und/oder Teilgruppe kann bevorzugt aus mehr als 5 und weniger als 25 Produkten bestehen. Unter einem "Separierzyklus" soll in diesem Zusammenhang insbesondere ein sich wiederholender Bewegungszyklus der Separiereinheit verstanden werden, der der Separierung und Weitergabe einer Hauptgruppe je zugeführter Produktkolonne dient. Unter einer "Produktkolonne" soll in diesem Zusammenhang eine Menge von Produkten verstanden werden, die aus insbesondere in einem Stapel aufgereihten, sich berührenden Einzelprodukten besteht. Der Separiervorrichtung können ein oder mehrere Produktkolonnen zugeführt werden. Bevorzugt ist bei mehreren zugeführten Produktkolonnen für jede Produktkolonne jeweils eine dieser Produktkolonne zugeordnete Portioniereinheit zur Bildung von Hauptgruppen aus dieser Produktkolonne vorgesehen. Bevorzugt sind die Produkte flache, besonders bevorzugt scheibenförmige Produkte, insbesondere Biscuits. Unter "scheibenförmig" soll in diesem Zusammenhang insbesondere eine Gestalt eines Körpers verstanden werden, die zumindest im Wesentlichen zwei Flächen, eine Dicke und einen Rand aufweist. Unter "flach" soll in diesem Zusammenhang insbesondere verstanden werden, dass die Dicke des Produkts zumindest geringer ist als die weiteren Erstreckungen des Produkts. Bevorzugt ist ein senkrecht zur Dicke gemessener Durchmesser des Produkts in allen Richtungen zumindest doppelt so groß wie die Dicke des Produkts. Der Rand kann der Form eines Vielecks, bevorzugt eines Dreiecks oder eines Vierecks, oder insbesondere der eines Kreises zumindest angenähert sein. Unter "zumindest angenähert" soll in diesem Zusammenhang insbesondere verstanden werden, dass die Gestalt des Rands von der Form, der er angenähert ist, insbesondere senkrecht zur Dicke des Produkts gemessen, bevorzugt weniger als 25%, besonders bevorzugt weniger als 10% bezogen auf einen größten Produktdurchmesser abweicht. Es sind aber auch andere Produkte denkbar, die sich in einer Produktkolonne in einem Stapel ordnen lassen. Bevorzugt sind die Produkte in Richtung ihrer geringsten Produktdimension gestapelt. Die Produktkolonne kann senkrecht angeordnet sein. Bevorzugt ist die Produktkolonne horizontal oder gegenüber einer Horizontalen geneigt angeordnet. Die zugeführte Produktkolonne kann von einer dem Fachmann geläufigen Transportvorrichtung getragen werden, insbesondere von einer Rinne. Die Produktkolonne kann mit Hilfe verschiedener, dem Fachmann geläufiger Verfahren in der Zufuhrbewegung transportiert werden, wie zum Beispiel durch mit den Produkten in Form- oder Kraftschluss stehende bewegte Bänder und/oder Riemen, durch Schwerkraft und insbesondere durch Vibration der Transporteinrichtung. Bevorzugt sind die Produkte in der Transportvorrichtung auf ihren Rändern stehend angeordnet. Die Produkte sind bevorzugt in Zufuhrrichtung gestapelt. Die Produkte können bevorzugt eine geschindelte Konfiguration einnehmen. Unter einer "geschindelten" Konfiguration soll insbesondere verstanden werden, dass die Produkte in der Produktkolonne in oder besonders bevorzugt gegen die Richtung der Zufuhrbewegung geneigt angeordnet sind. Unter einer "kontinuierlichen" Zufuhrbewegung soll in diesem Zusammenhang insbesondere verstanden werden, dass die Produktkolonne in einer andauernden Bewegung zugeführt wird. Eine Zufuhrgeschwindigkeit in Zufuhrrichtung kann dabei veränderlich sein. Geschwindigkeits-änderungen sind bevorzugt stetig. Insbesondere soll die Portioniereinheit aus der zugeführten Produktkolonne die Hauptgruppen bilden können, während die Produktkolonne in einer Zufuhrbewegung zugeführt wird. Insbesondere soll die Produktkolonne während der Separierung einer Hauptgruppe in der Zufuhrbewegung unterbrechungsfrei zugeführt werden können. Bevorzugt soll die Portioniereinheit aus der zugeführten Produktkolonne die Hauptgruppen auch bei einer Unterbrechung der kontinuierlichen Zufuhrbewegung bilden können. Eine Unterbrechung der kontinuierlichen Zufuhrbewegung kann zum Beispiel auftreten, wenn die Produktzufuhr stoppt. Insbesondere kann die Portioniereinheit bei einer unterbrochenen Zufuhrbewegung einen begonnen Separierzyklus zu Ende führen und/oder eine Hauptgruppe bilden, wenn ausreichend Produkte zur Verfügung stehen. Unter einer Beschleunigung zumindest "im Wesentlichen" in Richtung der Zufuhrbewegung soll in diesem Zusammenhang insbesondere verstanden werden, dass die Portioniereinheit die Hauptgruppe zur Beabstandung von der Produktkolonne in einer Richtung beschleunigt, die weniger als 45°, bevorzugt weniger als 10°, besonders bevorzugt weniger als 20° von der Zufuhrrichtung abweicht. Unter einer "Ausgangsposition" soll in diesem Zusammenhang insbesondere eine Position der Portioniereinheit verstanden werden, von der aus ein Separierzyklus zur Separierung einer Hauptgruppe gestartet wird. Die Zeitdauer eines Separierzyklus ist bevorzugt kürzer als die Zeitdauer, die für die Zuführung eines der Produktmenge einer Hauptgruppe entsprechenden Produktstapels benötigt wird. Ist die Zeitdauer kürzer, wartet die Portioniereinheit vor Beginn eines nächsten Separierzyklus bevorzugt, bis die Produktmenge einer Hauptgruppe erneut zur Verfügung steht. Ausgehend von der Position, an der die Hauptgruppe von der Produktkolonne separiert wird, beabstandet die Portioniereinheit die Hauptgruppe bevorzugt zumindest um einen Abstand, der zumindest der mit der Zufuhrbewegung zugeführten Produktkolonnenlänge bis zum Zeitpunkt eines Weitertransports der separierten Hauptgruppe entspricht. Bevorzugt beabstandet die Portioniereinheit ausgehend von der Position, an der die Hauptgruppe von der Produktkolonne separiert wird, die Hauptgruppe um einen Abstand, der zumindest einer halben Hauptgruppenlänge, besonders bevorzugt maximal einer Hauptgruppenlänge entspricht. Die Portioniereinheit kann die Hauptgruppe direkt zu einer Weitertransporteinheit transportieren. Unter einer "Weitertransporteinheit" soll in diesem Zusammehang insbesondere eine Transporteinheit verstanden werden, die die Hauptgruppe von der Separiereinheit weg bewegt und bevorzugt zu einem nächsten Verarbeitungsprozess, insbesondere einem Verpackungsprozess, bringt. Insbesondere kann die Weitertransporteinheit eine Kette, wie zum Beispiel eine Zufuhr- oder Querkette, sein. Unter einer "Kette" soll in diesem Zusammenhang insbesondere eine Transportvorrichtung verstanden werden, die diskrete Ablagepositionen zur Aufnahme von Produkten aufweist. Die Zufuhrbewegung kann während des gesamten Separierzyklus aufrechterhalten werden. Ein Aufstauen der Produktkolonne kann vermieden werden. Platz für ein Stauen der Produktkolonne während eines Stopps der Zufuhrbewegung kann eingespart werden. Ein erhöhter Staudruck durch Aufstauen der Produktkolonne kann vermieden werden. Beschädigungen der Produkte durch den Staudruck und/oder erhöhte Reibung zwischen den Produkten kann vermieden werden. Die Produkte können geschont werden. Die nächste Hauptgruppe kann der Separiereinheit zugeführt werden, während die Portioniereinheit die vorherige Hauptgruppe beabstandet. Die Leistung der Separiereinheit kann erhöht werden. Insbesondere kann es möglich sein, mit einer Portioniereinheit aus einer Produktkolonne bis zu 50 Hauptgruppen zu separieren. Es kann eine einzige Portioniereinheit zur Bildung der Hauptgruppen aus einer zugeführten Produktkolonne eingesetzt werden. Es können weitere Portioniereinheiten eingespart werden. Die Separiereinheit kann besonders kompakt sein. Es können Kosten eingespart werden.

Unter einer "Ablegeeinheit" soll in diesem Zusammenhang insbesondere eine Einheit verstanden werden, die dazu vorgesehen ist, die Hauptgruppe auf oder in der Weitertransporteinheit abzulegen. Die Weitertransporteinheit kann insbesondere eine Querkette der Verpackungsmaschine sein. Die Ablegeeinheit kann Bestandteil der Weitertransporteinheit sein. Insbesondere können Teilungen einer als Querkette ausgebildeten Weitertransporteinheit dazu vorgesehen sein, die Hauptgruppen in einer Abtransportbewegung mit einer Bewegungskomponente zumindest im Wesentlichen quer zur Zufuhrbewegung abzutransportieren. Unter einer "Abtransportbewegung" soll in diesem Zusammenhang insbesondere diejenige Bewegung verstanden werden, mit der die Hauptgruppe zur Weitertransporteinheit überführt wird. Unter "im Wesentlichen quer" soll in diesem Zusammenhang insbesondere verstanden werden, dass die Hauptgruppe während der Abtransportbewegung in einer Richtung quer zur Zufuhrbewegung den größten Weg zurücklegt. Weist die Hauptgruppe in der Richtung quer zur Zufuhrbewegung eine geringere Länge auf als in Richtung der Zufuhrbewegung, kann die Hauptgruppe quer mit einer geringeren Geschwindigkeit abtransportiert werden als bei einem Abtransport in Richtung der Zufuhrbewegung. Die Separiereinheit kann besonders kompakt sein. Die Hauptgruppe kann in einer Abtransportbewegung in einer Richtung quer zur Zufuhrbewegung seitwärts abgeschoben werden. Bevorzugt kann die Hauptgruppe in einer Abtransportbewegung in einer Richtung quer zur Zufuhrbewegung nach unten abgelegt werden. Die Hauptgruppe kann unter Mithilfe der Schwerkraft in die unter der Ablegeeinheit befindliche Weitertransporteinheit gelangen. Die Ablegeeinheit kann als Schaufel ausgeführt sein, auf der die Hauptgruppe aufliegt. Die Ablegeeinheit ist als zweiteilige Schaufel ausgebildet und ist auf einer Unterseite öffenbar. Die Hauptgruppe kann besonders schnell an eine unter der Ablegeeinheit angeordnete Weitertransporteinheit übergeben werden.

In einer weiteren Ausgestaltung der Erfindung wird vorgeschlagen, dass die Ablegeeinheit und/oder die Portioniereinheit dazu vorgesehen ist, die Hauptgruppen synchronisiert mit einer Weitertransportbewegung in eine Weitertransporteinheit abzulegen. Bevorzugt kann die Portioniereinheit dazu vorgesehen sein, die Hauptgruppen synchronisiert mit der Weitertransportbewegung abzulegen. Besonders bevorzugt können die Ablegeeinheit und die Portioniereinheit von einer zumindest in Richtung der Zufuhrbewegung gemeinsam bewegten Baugruppe gebildet werden. Die Abtransportbewegung kann von einer Bewegung zumindest im Wesentlichen in Richtung der Weitertransportbewegung gebildet werden. Bevorzugt kann die Abtransportbewegung eine Bewegungskomponente zumindest im Wesentlichen quer zur Zufuhrbewegung sowie eine weitere Bewegungskomponente zumindest im Wesentlichen in Richtung und synchron mit der Weitertransportbewegung enthalten. Die Weitertransporteinheit kann in einer kontinuierlichen Weitertransportbewegung bewegt werden. Insbesondere muss die Weitertransporteinheit zum Ablegen der Hauptgruppen nicht gestoppt werden. Ist die Weitertransportrichtung zumindest im Wesentlichen quer zur Zufuhrbewegung angeordnet, kann die zumindest im Wesentlichen quer zur Zufuhrbewegung angeordnete Bewegungskomponente der Abtransporteinrichtung mit der Weitertransporteinheit synchronisiert werden. Es kann zu einer Synchronisierung der Hauptgruppe mit der Weitertransporteinheit die Abtransportbewegung auch von einer weiteren Bewegungskomponente überlagert werden. Ist die Weitertransportbewegung zumindest im Wesentlichen in Richtung der Zufuhrbewegung angeordnet, kann insbesondere eine Bewegung der Ablegeeinheit im Wesentlichen in Richtung der Zufuhrrichtung dazu vorgesehen sein, die Hauptproduktgruppe mit der Weitertransportbewegung zu synchronisieren.

Bevorzugt ist die Portioniereinheit dazu vorgesehen, die Hauptgruppen vor Beginn der Abtransportbewegung zumindest im Wesentlichen zu stoppen. Insbesondere kann die Portioniereinheit dazu vorgesehen sein, die Hauptgruppe zu stoppen, während die zugeführte Produktkolonne in der Zufuhrbewegung zugeführt wird. Die Hauptgruppe kann vorteilhaft für die Abtransportbewegung vorbereitet werden, insbesondere für eine Abtransportbewegung quer zur Zufuhrbewegung. Es kann eine besonders schonende Abtransportbewegung stattfinden. Beschädigungen der Produkte können vermieden werden. Eine Leistungsbeeinträchtigung durch Stoppen der Zufuhrbewegung kann vermieden werden.

Weiter wird ein mit der Zufuhrbewegung synchronisierbarer Produktkolonnengegenhalter vorgeschlagen, der dazu vorgesehen ist, zumindest während der Beabstandung und/oder dem Abtransport der Hauptgruppen ein Ende der zugeführten Produktkolonne zu sichern. Insbesondere kann der Produktkolonnengegenhalter ein Umkippen, insbesondere der in Richtung der Zufuhrbewegung letzten Produkte der Produktkolonne, verhindern. Der Produktkolonnengegenhalter kann, nachdem die Hauptgruppe von der Portioniereinheit separiert wurde, an das Ende der Produktkolonne angelegt werden und dieses sichern. Der Produktkolonnengegenhalter wird mit der kontinuierlichen Zufuhrbewegung der Produktkolonne mitbewegt. Der Produktkolonnengegenhalter kann durch den Staudruck der Produktkolonne mitbewegt werden. Bevorzugt wird der Produktkolonnengegenhalter durch einen Antrieb aktiv mit der Produktkolonne mitbewegt. Eine erhöhte Krafteinwirkung auf die Produktkolonne kann vermieden werden. Es kann eine besonders schonende Sicherung der Produktkolonne erreicht werden.

In einer weiteren Ausgestaltung der Erfindung wird eine Zufuhreinheit vorgeschlagen, die dazu vorgesehen ist, die zugeführte Produktkolonne in einer gegenüber einer Horizontalen nach unten geneigten Zufuhrrichtung zuzuführen. Ist die Zufuhreinheit nach unten geneigt, kann der Produktkolonne durch die Gewichtskraft der Produkte, die die Produktkolonne bilden, in Richtung der Zufuhrbewegung beschleunigt werden. Bevorzugt ist die Zufuhreinheit als Rinne oder als Schacht ausgebildet. Bevorzugt ist die Zufuhrrichtung um einen Winkel von mehr als 10°, besonders bevorzugt von mehr als 30° gegenüber der Horizontalen nach unten geneigt. Insbesondere kann die Zufuhrrichtung um einen Winkel zwischen 30° und 45° nach unten geneigt sein. Die auf die Produktkolonne wirkende Gewichtskraft kann die Beschleunigung durch die Portioniereinheit unterstützen. Die Portioniereinheit muss, um die Hauptgruppe durch eine Beschleunigung in Richtung der Zufuhrbewegung zu separieren, nur eine geringere zusätzliche Kraft in Richtung der Zufuhrbewegung auf die Hauptproduktgruppe aufbringen. Die Hauptgruppe kann besonders schonend beschleunigt werden. Eine Beschädigung von Produkten kann vermieden werden.

In einer weiteren vorteilhaften Variante der Erfindung kann die Separiervorrichtung eine Zufuhreinheit enthalten, die dazu vorgesehen ist, die zugeführten Produktkolonne in einer gegenüber einer Horizontalen nach oben geneigten Zufuhrrichtung zuzuführen. Ist die Zufuhreinheit nach oben geneigt, kann die Produktkolonne durch die auf die Produktkolonne wirkende Gewichtskraft stabilisiert werden. Insbesondere kann ein Kippen der letzten Produkte der Produktkolonne verhindert werden. Bevorzugt ist die Zufuhreinheit als Rinne oder als Schacht ausgebildet. Bevorzugt ist die Zufuhrrichtung um einen Winkel von mehr als 10°, besonders bevorzugt von mehr als 30° gegenüber der Horizontalen nach oben geneigt. Insbesondere kann die Zufuhrrichtung um einen Winkel zwischen 30° und 45° nach oben geneigt sein. Auf einen Produktkolonnengegenhalter kann verzichtet werden. Kosten können eingespart werden. Die Separiervorrichtung kann besonders einfach aufgebaut sein.

Weiter werden zumindest ein Separierelement und ein Gruppengegenhalter vorgeschlagen, zwischen denen die Hauptgruppen und/oder Teilgruppen gebildet werden. Unter einem "Separierelement" soll in diesem Zusammenhang insbesondere ein flaches, bevorzugt schwertähnliches Element, insbesondere ein Separierschwert, verstanden werden. Das Separierelement kann an einer Separierposition zwischen zwei Produkte der Produktkolonne geschoben werden und diese an dieser Position so in Haupt- oder Teilgruppen separieren. Unter einem "Gruppengegenhalter" soll in diesem Zusammenhang insbesondere ein Element verstanden werden, das vor oder bei der Separierung einer Hauptgruppe an das in Richtung der Zufuhrbewegung liegende Ende der Produktkolonne angelegt wird und in Folge das in Richtung der Zufuhrbewegung liegende Ende der Hauptproduktgruppe sichert. Ist die Portioniereinheit dazu vorgesehen, eine Hauptgruppe zu bilden, die aus mehreren Teilgruppen besteht, können zur Separierung der Teilgruppen innerhalb der Hauptgruppe weitere Separierelemente vorgesehen sein. Die Separierelemente können dazu vorgesehen sein, einen Abstand der Teilgruppen zueinander zu vergrößern. Bevorzugt können die Separierelemente zueinander bewegbar, insbesondere verschiebbar, gelagert sein, um nach der Bildung der Teilgruppen den Abstand der Teilgruppen zueinander zu vergrößern. Insbesondere können Teilgruppen gebildet werden, indem an einer Position zumindest zwei Separierelemente in die Produktkolonne geschoben werden, die anschließend zueinander beabstandet werden und so den Abstand der Teilgruppen zueinander vergrößern. Die Gruppen können einfach und wirkungsvoll aus der Produktkolonne separiert werden. Separierelemente und Gruppengegenhalter können zur Separierung der Hauptproduktgruppe von der Produktkolonne bevorzugt in einer Bewegungskomponente, die zumindest im Wesentlichen quer zur Richtung der Zufuhrbewegung ausgerichtet ist, zwischen Produkte der Produktkolonne eingeführt werden. Dieser Bewegungskomponente ist bevorzugt eine zweite, mit der Zufuhrbewegung synchronisierte Bewegungskomponente überlagert. Insbesondere kann die Portioniereinheit mit Separierelementen und Gruppengegenhaltern mit der Zufuhrbewegung synchronisiert bewegt werden. Es ist ein produktschonendes Separieren möglich. Eine Beeinflussung der kontinuierlichen Zufuhrbewegung der Produktkolonne durch die Portioniereinheit kann vermieden werden. Die kontinuierliche Zufuhrbewegung kann unterbrechungsfrei sein.

Vorteilhaft wird eine Hauptgruppenlänge und/oder eine Teilgruppenlänge durch Abstände zwischen Separierelementen und/oder dem Separierelement und dem Gruppengegenhalter bestimmt. Die Separiereinheit kann einen "Messeinleger" bilden. Unter einem "Messeinleger" soll in diesem Zusammenhang insbesondere eine Separiereinheit verstanden werden, die Hauptgruppen und/oder Teilgruppen gleicher Länge bildet. Die Abstände zwischen den Separierelementen und/oder dem Separierelement und dem Gruppengegenhalter kann einstellbar sein. Es können besonders einfach eine Hauptgruppe und/oder Teilgruppen einer gewünschten Länge separiert werden. Es ist auch denkbar, dass die Portioniereinheit dazu vorgesehen ist, Hauptgruppen und/oder Teilgruppen zu bilden, die aus einer gleich bleibenden Produktzahl bestehen. Eine gleich bleibende Produktzahl kann durch dem Fachmann bekannte Maßnahmen sichergestellt werden. Es kann eine gleich bleibende Anzahl an Produkten in einer Hauptgruppe und/oder Teilgruppe sichergestellt werden.

Besonders vorteilhaft enthält eine Verpackungsmaschine die erfindungsgemäße Separiervorrichtung. Unter einer "Verpackungsmaschine" soll in diesem Zusammenhang insbesondere eine Verpackungsmaschine verstanden werden, die zum Verpacken von Lebensmitteln, insbesondere Biscuits, vorgesehen ist. Insbesondere kann die Verpackungsmaschine dazu vorgesehen sein, einen oder mehrere "Slugs" genannte Biscuit-Stapel in eine Schlauchbeutelverpackung oder eine Rollenverpackung zu verpacken. Die Biscuit-Stapel können von einer Hauptgruppe oder von Teilgruppen der Hauptgruppe gebildet werden. Bevorzugt kann die Separiereinheit dazu vorgesehen sein, Hauptgruppen zu bilden, die den in einem Schritt zu verpackende Gruppen der Verpackung entsprechen. Es kann eine besonders kompakte, leistungsfähige und kostengünstige Verpackungsmaschine mit den genannten Vorteilen erreicht werden.

Weiter wird ein Verfahren zur Bildung von Hauptgruppen mit einer erfindungsgemäßen Separiervorrichtung vorgeschlagen. Die Separiervorrichtung kann in der beschriebenen Art besonders effizient und wirtschaftlich betrieben werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Verpackungsanlage mit einer erfindungsgemäßen Separiervorrichtung,
- Fig. 2: eine schematische Darstellung der Separiervorrichtung zu Beginn eines Separiervorgangs,
- Fig. 3: eine schematische Darstellung der Separiervorrichtung mit einer beabstandeten Hauptgruppe,
- Fig. 4: eine schematische Darstellung der Separiervorrichtung mit einer Weitertransporteinheit,
- Fig. 5: eine schematische Darstellung einer Separiervorrichtung in einem zweiten Ausführungsbeispiel,
- Fig. 6: eine schematische Darstellung einer Separiervorrichtung in einer Ausgangsposition in einem dritten Ausführungsbeispiel,
- Fig. 7: eine schematische Darstellung einer Separiervorrichtung mit einer beabstandeten Hauptgruppe in einem vierten Ausführungsbeispiel,
- Fig. 8: eine schematische Darstellung einer Separiervorrichtung in einem fünften Ausführungsbeispiel,
- Fig. 9: eine schematische Darstellung einer Separiervorrichtung in einem sechsten Ausführungsbeispiel und
- Fig. 10: eine schematische Darstellung eines Separierzyklus mit einer Separiervorrichtung in einem sechsten Ausführungsbeispiel.

### Beschreibung der Ausführungsbeispiele

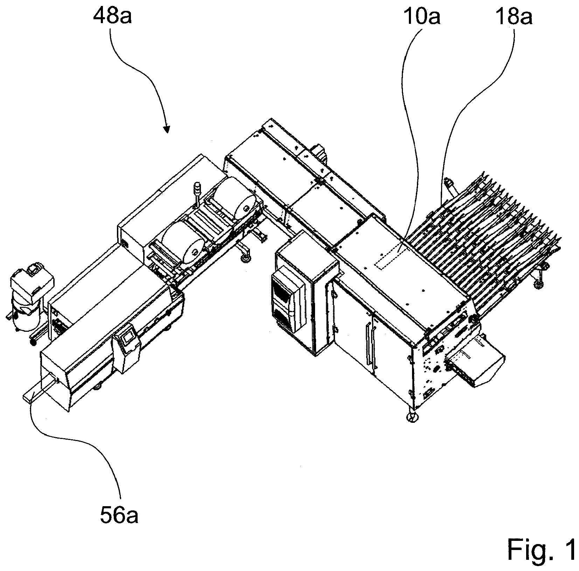

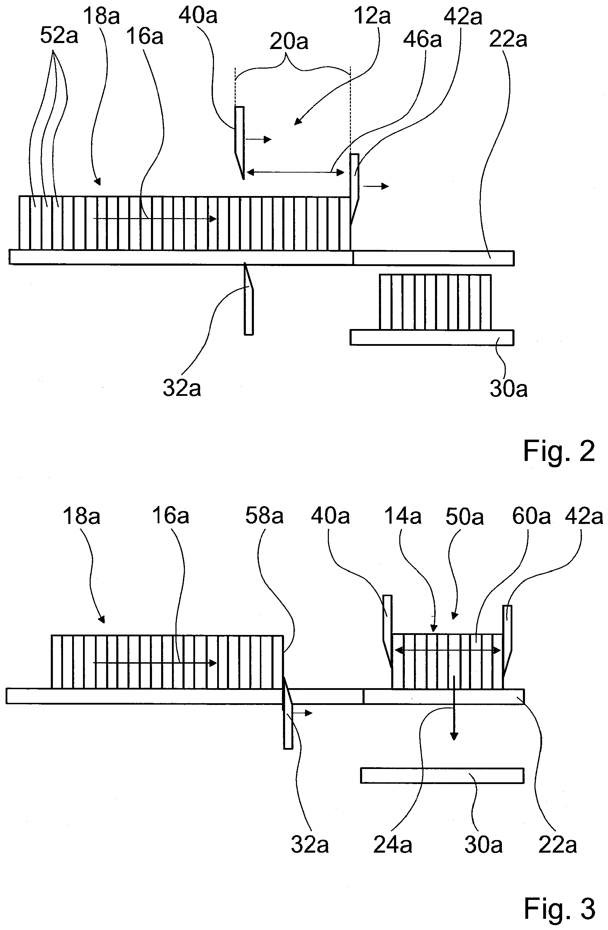

Figur 1 zeigt eine Verpackungsanlage 48a zum Verpacken von Slugs 50a genannten Biscuit-Stapeln mit einer erfindungsgemäßen Separiervorrichtung 10a. Der Verpackungsanlage 48a werden als Biscuits ausgebildete Produkte 52a in mehreren Produktkolonnen 18a zugeführt. Die verpackten Slugs 50a verlassen die Verpackungsanlage 48a nach dem Verpacken auf einem Auslaufband 56a. Die Verpackungsanlage 48a enthält für jede ihr zugeführte Produktkolonne 18a eine Separiervorrichtung 10a mit einer Portioniereinheit 12a, die Hauptgruppen 14a aus der in einer kontinuierlichen Zufuhrbewegung 16a zugeführten Produktkolonne 18a beabstandet und die Hauptgruppen 14a aus der zugeführten Produktkolonne 18a durch eine Beschleunigung zumindest im Wesentlichen in Richtung der Zufuhrbewegung 16a bildet. Die Separiervorrichtungen 10a mit den Portioniereinheiten 12a werden von nicht näher dargestellten Antrieben synchron angetrieben. Die Synchronisierung der Antriebe kann mechanisch, zum Beispiel durch eine Getriebevorrichtung, oder bevorzugt elektrisch, insbesondere durch eine Steuer- und Regeleinheit, erfolgen. Es ist aber auch möglich, die Separiervorrichtungen 10a getrennt anzutreiben. Die Portioniereinheit 12a kehrt in eine Ausgangsposition 20a zur Bildung der nächsten Hauptgruppe 14a zurück, während die zugeführte Produktkolonne 18a in einer Zufuhrbewegung 16a zugeführt wird (Figur 2 und Figur 3).

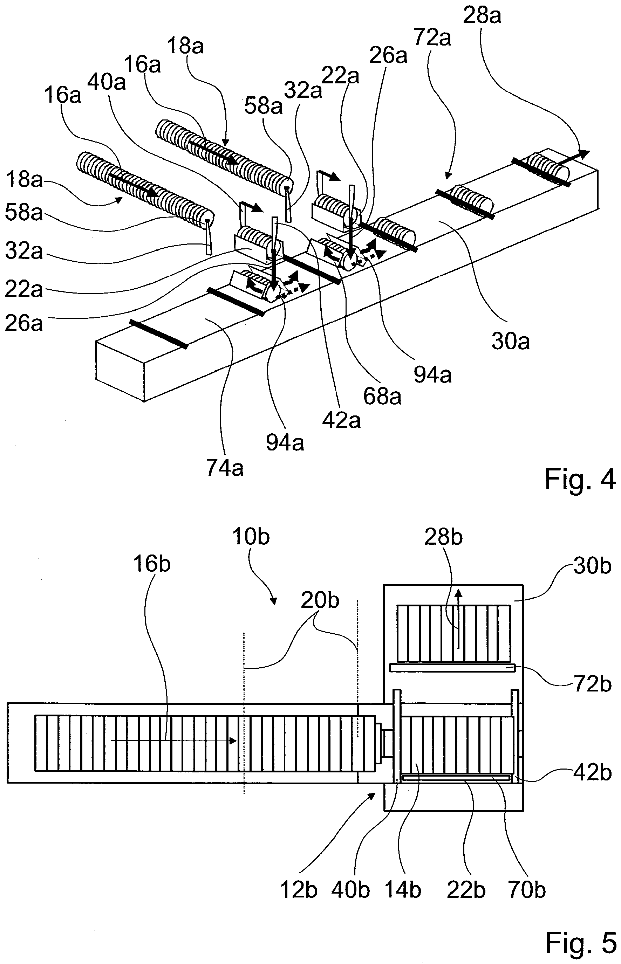

Die Hauptgruppe 14a wird nach dem Beabstanden von einer Ablegeeinheit 22a in einer Abtransportbewegung 24a mit einer Bewegungskomponenten 26a, die zumindest im Wesentlichen quer zur Zufuhrbewegung 16a angeordnet ist, aus der Separiervorrichtung 10a abtransportiert (Figur 3 und Figur 4). Die Portioniereinheit 12a stoppt die Hauptgruppen 14a vor Beginn der Abtransportbewegung 24a. Ein mit der Zufuhrbewegung 16a synchronisierbarer Produktkolonnengegenhalter 32a sichert während der Beabstandung und dem Abtransport der Hauptgruppen 14a ein in Richtung der Zufuhrbewegung 16a liegendes freies Ende 58a der zugeführten Produktkolonne 18a.

Die Hauptgruppen 14a werden von der Portioniereinheit 12a zwischen einem Separierelement 40a und einem Gruppengegenhalter 42a gebildet. Die Separiervorrichtung 10a ist als so genannter Messeinleger ausgebildet, das heißt, sie bildet Hauptgruppen 14a mit einer gleich bleibenden Hauptgruppenlänge 60a. Ein Abstand 46a zwischen dem Separierelement 40a und dem Gruppengegenhalter 42a bestimmt die Hauptgruppenlänge 60a der separierten Hauptgruppe 14a.

Die separierte Hauptgruppe 14a kommt auf der Ablegeeinheit 22a zu liegen, die die Hauptgruppe 14a nach unten auf einer Weitertransporteinheit 30a in der Abtransportbewegung 24a ablegt. In diesem Beispiel verfügt die Verpackungsanlage 48a über zwei Separiervorrichtungen 10a, denen jeweils eine Produktkolonne 18a zugeführt wird. Die Ablegeeinheit 22a ist auf eine dem Fachmann bekannte Art als zweiteilige Schaufel 68a ausgebildet. Die Ablegeeinheit 22a wird zunächst mit einer Bewegungskomponente 26a der Abtransportbewegung 24a quer zur Zufuhrbewegung 16a nach unten in Richtung der Weitertransporteinheit 30a bewegt. Die Weitertransporteinheit 30a ist als Querkette 72a mit diskreten Ablagepositionen 74a ausgebildet. Befindet sich die für die Hauptgruppe 14a vorgesehene Ablageposition 74a unter der Ablegeeinheit 22a, öffnet sich die zweiteilige Schaufel 68a, so dass die Hauptgruppe 14a durch die Gewichtskraft auf der Ablageposition 74a der Weitertransporteinheit 30a zu liegen kommt. Optional kann die Ablegeeinheit 22a die Hauptgruppe 14a mit einer weiteren Bewegungskomponente 94a synchronisiert mit einer Weitertransportbewegung 28a der Weitertransporteinheit 30a ablegen. Die Weitertransporteinheit 30a führt die Hauptgruppe 14a einem hier nicht näher dargestellten Verpackungsprozess zu, während die Portioniereinheit 12a zur Bildung der nächsten Hauptgruppe 14a in eine Ausgangsposition 20a zurückkehrt.

Die nachfolgende Beschreibung und die Zeichnung weiterer Ausführungsbeispiels beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels verwiesen werden kann. Zur Unterscheidung der Ausführungsbeispiele sind anstelle des Buchstabens a des ersten Ausführungsbeispiels die Buchstaben b, c, d, e und f den Bezugszeichen der weiteren Ausführungsbeispiele nachgestellt.

Figur 5 zeigt eine Separiervorrichtung 10b in einem zweiten Ausführungsbeispiel. Die Separiervorrichtung 10b unterscheidet sich dahingehend vom ersten Ausführungsbeispiel, dass eine Hauptgruppe 14b nach der Separierung durch eine Portioniereinheit 12b durch eine als Schieber 70b ausgebildete Ablegeeinheit 22b in einer Abtransportbewegung 24b quer zu einer Zufuhrbewegung 16b horizontal in eine Weitertransporteinheit 30b abgeschoben wird. Die Weitertransporteinheit 30b führt die Hauptgruppe 14b auch einem hier nicht näher dargestellten Verpackungsprozess zu, während die Portioniereinheit 12b zur Bildung der nächsten Hauptgruppe 14b in eine Ausgangsposition 20b zurückkehrt. Die Funktion des Schiebers 70b kann ebenfalls durch Teilungen der Weitertransporteinheit 30b wahrgenommen werden. Ist die Weitertransporteinheit 30b als Querkette 72b ausgebildet, kann die Hauptgruppe 14b nach der Separierung durch die Portioniereinheit 12b zwischen zwei Teilungen der Querkette 72b geschoben werden, woraufhin die Querkette 72b die Hauptgruppe 14b in der Abtransportbewegung 24b quer zur Zufuhrbewegung 16b abtransportiert.

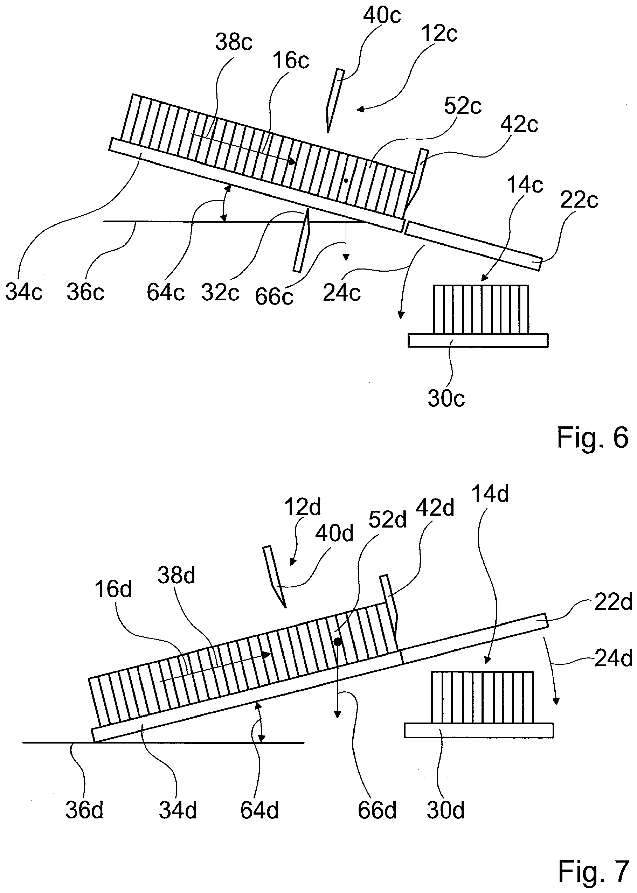

Figur 6 zeigt eine Separiervorrichtung 10c in einem dritten Ausführungsbeispiel. Die Separiervorrichtung 10c unterscheidet sich vom ersten Ausführungsbeispiel durch eine Zufuhreinheit 34c, die dazu vorgesehen ist, eine zugeführte Produktkolonne 18c in einer gegenüber einer Horizontalen 36c nach unten geneigten Zufuhrrichtung 38c zuzuführen. Die Zufuhreinheit 34c ist um einen Winkel 64c zwischen 20° und 30° gegenüber der Horizontalen 36c nach unten geneigt. Eine auf die Produktkolonne 18c wirkende Gewichtskraft 66c bewirkt eine Beschleunigung der Produktkolonne 18c in Zufuhrrichtung 38c. Eine Portioniereinheit 12c muss daher nur eine geringere Kraft auf eine Hauptgruppe 14c ausüben, um diese in Richtung einer Zufuhrbewegung 16c zu separieren. Produkte 52c der Hauptgruppe 14c können geschont werden und Beschädigungen vermieden werden. Die Hauptgruppe 14c wird nach der Separierung von einer Ablegeeinheit 22c in einer als Schwenkbewegung ausgebildeten Abtransportbewegung 24c auf einer horizontal angeordneten Weitertransporteinheit 30c abgelegt.

Figur 7 zeigt eine Separiervorrichtung 10d in einem vierten Ausführungsbeispiel. Die Separiervorrichtung 10d unterscheidet sich vom ersten Ausführungsbeispiel durch eine Zufuhreinheit 34d, die dazu vorgesehen ist, eine zugeführte Produktkolonne 18d in einer gegenüber einer Horizontalen 36d nach oben geneigten Zufuhrrichtung 38d zuzuführen. Die Zufuhreinheit 34d ist um einen Winkel 64d zwischen 20° und 30° gegenüber der Horizontalen 36d nach oben geneigt. Eine auf die Produktkolonne 18d wirkende Gewichtskraft 66d bewirkt, dass die Produkte 52d an einem freien Ende 58d der Produktkolonne 18d auf den darunter befindlichen Produkten 52d zu liegen kommen. Auf einen Produktkolonnengegenhalter, wie in den vorhergehenden Ausführungsbeispielen, der die letzten Produkte 52d des Endes 58d der Produktkolonne 18d stabilisiert, kann daher verzichtet werden. Eine Hauptgruppe 14d wird nach der Separierung von einer Ablegeeinheit 22d in einer als Schwenkbewegung ausgebildeten Abtransportbewegung 24d auf einer horizontal angeordneten Weitertransporteinheit 30d abgelegt.

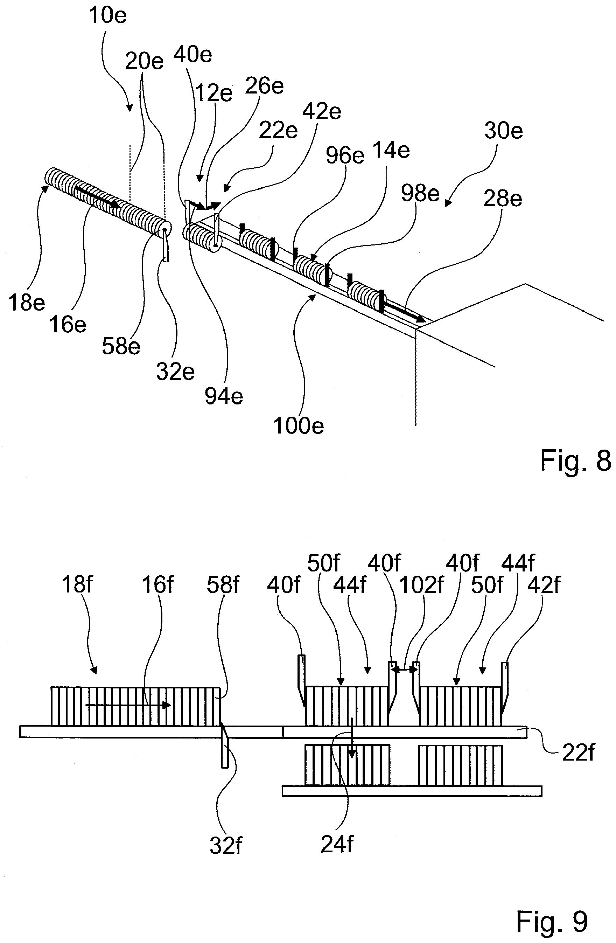

Figur 8 zeigt eine Separiervorrichtung 10e in einem fünften Ausführungsbeispiel. Die Separiervorrichtung 10e unterscheidet sich dahingehend vom ersten Ausführungsbeispiel, dass eine Portioniereinheit 12e und eine Ablegeeinheit 22e Hauptgruppen 14e synchronisiert mit einer Weitertransportbewegung 28e in eine Weitertransporteinheit 30e ablegt. Die Ablegeeinheit 22e wird in diesem Beispiel direkt von der Portioniereinheit 12e gebildet. Die Weitertransporteinheit 30e ist als eine Zufuhrkette 100e mit diskreten Ablagepositionen 74e einer Verpackungsablage 48e ausgebildet und bewegt sich in der mit einem Verpackungsprozess synchronisierten Weitertransportbewegung 28e. Die Zufuhrkette 100e weist Mitnehmer 96e und Gegenhalter 98e auf, zwischen denen die abgelegten Hauptgruppen 14e transportiert werden. Die Weitertransportbewegung 28e ist in Richtung einer Zufuhrbewegung 16e ausgerichtet. Die Portioniereinheit 12e beabstandet zunächst eine Hauptgruppe 14e durch eine Beschleunigung in Richtung der Zufuhrbewegung 16e und schiebt die separierte Hauptgruppe 14e mit einer quer zur Zufuhrbewegung 16e ausgerichteten Bewegungskomponente 26e in Richtung der Weitertransporteinheit 30e. Die Portioniereinheit 12e überlagert dieser Bewegungskomponente 26e eine weitere Bewegungskomponente 94e in Richtung der Weitertransportbewegung 28e derart, dass beim Ablegen der Hauptgruppe 14e in der Ablageposition 74e der Weitertransporteinheit 30e die Bewegungen der Hauptgruppe 14e und der Weitertransporteinheit 30e in Richtung der Weitertransportbewegung 28e synchron sind. Anschließend kehrt die Portioniereinheit 12e zur Bildung der nächsten Hauptgruppe 14e in eine Ausgangsposition 20e zurück. Ein Produktkolonnengegenhalter 32e, der mit der Zufuhrbewegung 16e synchron bewegt wird, sichert ein Ende 58e einer Produktkolonne 18e in der Zeitdauer, in der es nicht durch einen Gruppengegenhalter 42e gesichert ist.

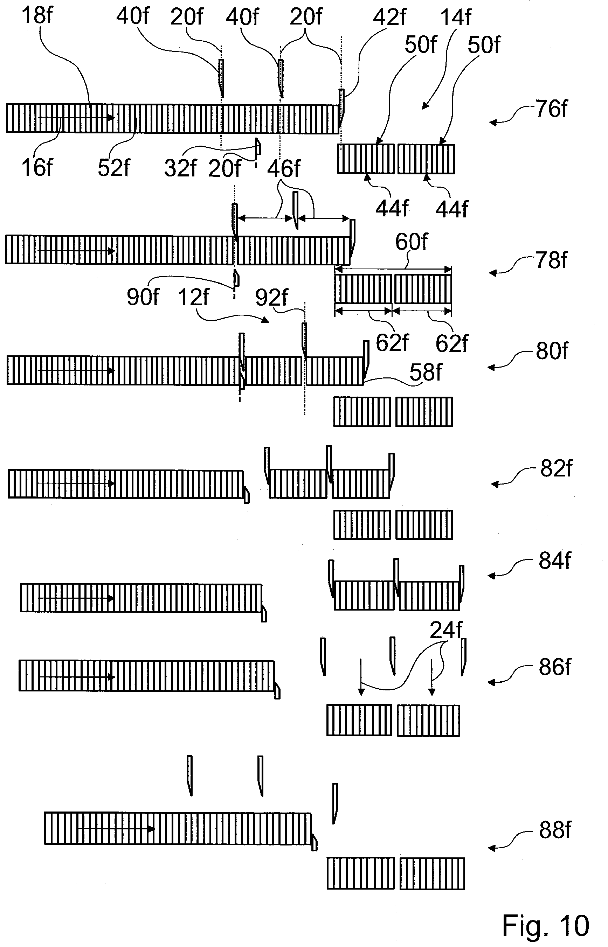

Figur 9 und Figur 10 zeigen ein Verfahren zur Bildung von Hauptgruppen 14f aus einer Produktkolonne 18f mit einer Separiervorrichtung 10f in einem weiteren Ausführungsbeispiel. Dieses Verfahren ist angepasst ebenfalls auf die Separiervorrichtungen 10a - 10e der weiteren Ausführungsbeispiele anwendbar. Die Separiervorrichtung 10f unterscheidet sich dahingehend vom ersten Ausführungsbeispiel, dass sie Hauptgruppen 14f bestehend aus mehreren Teilgruppen 44f bildet. Im gezeigten Beispiel bilden zwei gleich lange Teilgruppen 44f eine Hauptgruppe 14f. Eine Verpackungsanlage 48f kann beispielsweise Packungen mit jeweils zwei aus einer Teilgruppe 44f bestehenden Slugs 50f erstellen. Die Hauptgruppen 14f, bestehend aus den Teilgruppen 44f, werden zwischen den Separierelementen 40f und dem Gruppengegenhalter 42f gebildet. Eine Portioniereinheit 12f zur Bildung einer Hauptgruppe 14f, bestehend aus zwei Teilgruppen 44f, enthält insgesamt drei Separierelemente 40f und einen Gruppengegenhalter 42f. Der Abstand zwischen den beiden Teilgruppen 44f ist größer als eine Breite der Separierelemente 40f. Die Teilgruppen 44f werden gebildet, indem an der Teilungsposition 92f zwei als Separierschwert ausgebildete Separierelemente 40f eingeschoben werden. Diese beiden Separierelemente 40f sind zueinander beweglich gelagert und werden nach der Bildung der Teilgruppen 44f in einer Bewegung 102f zueinander beabstandet, um so den Abstand zwischen den beiden Teilgruppen 44f zu vergrößern. Abstände 46f zwischen den eine Teilgruppe 44f bildenden Separierelementen 40f und dem dem Gruppengegenhalter 42f benachbarten Separierelement 40f und dem Gruppengegenhalter 42f bestimmen Teilgruppenlängen 62f. Ein Abstand zwischen dem Gruppengegenhalter 42f und dem entferntesten Separierelement 40f bestimmt eine Hauptgruppenlänge 60f. Die Summe der Teilgruppenlängen 62f bildet die Hauptgruppenlänge 60f. Das bezogen auf die Hauptgruppe 14f äußere Separierelement 40f und der Gruppengegenhalter 42f führen eine Ausgleichsbewegung durch, so dass die Teilgruppenlänge 62f bei der Beabstandung der mittleren Separierelemente 40f unverändert bleibt.

Figur 10 zeigt Verfahrensschritte eines Separierzyklus. Die Separiervorrichtung 10f ist in Figur 10 dahingehend vereinfacht dargestellt, dass zur Separierung der Teilgruppen 44f nur ein Separierelement 40f vorgesehen ist und die Teilgruppen 44f nicht durch Beabstanden von zwei eingeschobenen Separierelementen 40f weiter beabstandet werden. In einem Verfahrensschritt 76f befinden sich die beiden Separierelemente 40f, ein Produktkolonnengegenhalter 32f und der Gruppengegenhalter 42f in einer Ausgangsposition 20f, während der Gruppengegenhalter 42f an ein Ende 58f einer in einer kontinuierlichen Zufuhrbewegung 16f zugeführten Produktkolonne 18f angelegt wird. Die Separierelemente 40f und der Gruppengegenhalter 42f sind Teil einer Portioniereinheit 12f und bewegen sich in Richtung der Zufuhrbewegung 16f synchron mit der Produktkolonne 18f. Der Produktkolonnengegenhalter 32f wartet in einer Separierposition 90f. Hat sich die Produktkolonne 18f gemessen von der Separierposition 90f so weit in Richtung der Zufuhrbewegung 16f bewegt, dass ihre Länge der Hauptgruppenlänge 60f entspricht, so wird in einem Verfahrensschritt 78f das an der Separierposition 90f befindliche erste Separierelement 40f in die Produktkolonne 18f eingeführt und so die Hauptgruppe 14f von der Produktkolonne 18f separiert. In einem Verfahrensschritt 80f wird nun das an einer Teilungsposition 92f befindliche zweite Separierelement 40f in die Hauptgruppe 14f eingeführt und so die beiden Teilgruppen 44f gebildet. Der Gruppengegenhalter 42f wird am Ende 58f der Produktkolonne 18f eingeführt und bewegt sich nun synchron mit der Zufuhrbewegung 16f und sichert das Ende 58f der Produktkolonne 18f. Die Portioniereinheit 12f beschleunigt in einem Verfahrensschritt 82f in Richtung der Zufuhrbewegung 16f und beabstandet so die aus den beiden Teilgruppen 44f bestehende Hauptgruppe 14f von der Produktkolonne 18f. Erreicht die Portioniereinheit 12f in einem Verfahrensschritt 84f mit der Hauptgruppe 14f die hier nicht näher dargestellte Ablegeeinheit, so stoppt die Portioniereinheit 12f die Hauptgruppe 14f ab. Die Ablegeeinheit bewegt in einem Verfahrensschritt 86f die Hauptgruppe 14f in einer Abtransportbewegung 24f im Wesentlichen quer zur Zufuhrbewegung 16f in eine ebenfalls nicht näher dargestellte Weitertransporteinheit. In einem Verfahrensschritt 88f bewegt sich die Portioniereinheit 12f mit den beiden Separierelementen 40f und dem Gruppengegenhalter 42f in Richtung der Ausgangsposition 20f zurück, so dass in einem neuen Separierzyklus die nächste Hauptgruppe 14f separiert werden kann. Sobald sich der Gruppengegenhalter 42f an das Ende 58f der Produktkolonne 18f angelegt hat, wird die Portioniereinheit 12f mit der Zufuhrbewegung 16f mit der Produktkolonne 18f mitbewegt, und der Produktkolonnengegenhalter 32f kann zurückgezogen werden und in die Separierposition 90f zurückkehren. Hat sich die Produktkolonne 18f gemessen von der Separierposition 90f so weit in Richtung der Zufuhrbewegung 16f bewegt, dass ihre Länge der Hauptgruppenlänge 60f entspricht, kann ein neuer Separierzyklus beginnen und die nächste Hauptgruppe 14f separiert werden.

## Patentansprüche

1. Separiervorrichtung mit zumindest einer Portioniereinheit (12a), die dazu vorgesehen ist, Hauptgruppen (14a) aus zumindest einer in einer kontinuierlichen Zufuhrbewegung (16a) zugeführten, von sich berührenden Einzelprodukten gebildeten Produktkolonne (18a) zu beabstanden und die Hauptgruppen (14a) aus der zumindest einen zugeführten Produktkolonne (18a) durch eine Beschleunigung zumindest im Wesentlichen in Richtung der Zufuhrbewegung (16a) zu bilden, wobei die Portioniereinheit (12a) dazu vorgesehen ist, in eine Ausgangsposition (20a) zur Bildung der nächsten Hauptgruppe (14a) zurückzukehren, während die zumindest eine zugeführte Produktkolonne (18a) in einer Zufuhrbewegung (16a) zugeführt wird, **gekennzeichnet durch** eine Ablegeeinheit (22a), die dazu vorgesehen ist, die Hauptgruppen (14a) in einer Abtransportbewegung (24a) mit einer Bewegungskomponente (26a) zumindest im Wesentlichen quer zur Zufuhrbewegung (16a) abzutransportieren, wobei die Ablegeeinheit (22a) als Schaufel ausgebildet ist, auf der die Hauptgruppe (14a) aufliegt, wobei die Ablegeeinheit (22a) als zweitteilige Schaufel ausgebildet ist und auf einer Unterseite offenbar ist.

2. Separiervorrichtung nach Anspruch 1, **dadurch gekennzeichnet, dass** die Portioniereinheit (12a) dazu vorgesehen ist, die Hauptgruppen (14a) vor Beginn der Abtransportbewegung (24a) zumindest im Wesentlichen zu stoppen.

3. Separiervorrichtung nach einem der vorhergehenden Ansprüche, **gekennzeichnet durch** zumindest einen mit der Zufuhrbewegung (16a) synchronisierbaren Produktkolonnengegenhalter (32a), der dazu vorgesehen ist, zumindest während der Beabstandung und/oder dem Abtransport der Hauptgruppen (14a) ein Ende (58a) der zugeführten Produktkolonne (18a-f) zu sichern.

4. Separiervorrichtung nach einem der vorhergehenden Ansprüche, **gekennzeichnet durch** eine Zufuhreinheit (34a), die dazu vorgesehen ist, die zugeführte Produktkolonne (18a) in einer gegenüber einer Horizontalen (36a) nach unten geneigten Zufuhrrichtung (38a) zuzuführen.

5. Separiervorrichtung nach einem der Ansprüche 1 bis 3, **gekennzeichnet durch** eine Zufuhreinheit (34a), die dazu vorgesehen ist, die zugeführten Produktkolonne (18a) in einer gegenüber einer Horizontalen (36a) nach oben geneigten Zufuhrrichtung (38a) zuzuführen.

6. Separiervorrichtung nach einem der vorhergehenden Ansprüche, **gekennzeichnet durch** zumindest ein Separierelement (40a) und einen Gruppengegenhalter (42a), zwischen denen die Hauptgruppen (14a) und/oder Teilgruppen (44a) gebildet werden.

7. Separiervorrichtung nach Anspruch 6, **dadurch gekennzeichnet, dass** eine Hauptgruppenlänge (60a) und/oder eine Teilgruppenlänge (62a) durch Abstände (46a) zwischen Separierelementen (40a) und/oder dem Separierelement (40a) und dem Gruppengegenhalter (42a) bestimmt werden.

8. Verpackungsmaschine mit einer Separiervorrichtung (10a) nach einem der vorhergehenden Ansprüche.

9. Verfahren zur Bildung von Hauptgruppen (14a) aus einer Produktkolonne (18a) mit einer Separiervorrichtung (10a) nach einem der vorhergehenden Ansprüche.

## Claims

1. Separating device having at least one portioning unit (12a), which is designed to space main groups (14a) from at least one product column (18a) supplied in a continuous feed motion (16a) and formed from mutually touching individual products and to form the main groups (14a) from the at least one supplied product column (18a) by an acceleration at least substantially in the direction of the feed motion (16a), wherein the portioning unit (12a) is designed to return into a starting position (20a) in order to form the next main group (14a), while the at least one supplied product column (18a) is supplied in a feed motion (16a), **characterized by** a depositing unit (22a), which is designed to evacuate the main groups (14a) in an evacuation motion (24a) having a motional component (26a) at least substantially transversely to the feed motion (16a), wherein the depositing unit (22a) is configured as a bucket on which the main group (14a) rests, wherein the depositing unit (22a) is configured as a two-part bucket and can be opened on a bottom side.

2. Separating device according to Claim 1, **characterized in that** the portioning unit (12a) is designed to at least substantially stop the main groups (14a) prior to the start of the evacuation motion (24a).

3. Separating device according to either of the preceding claims, **characterized by** at least one product column brace (32a), which is synchronizable with the feed motion (16a) and which is designed to, at least during the spacing and/or evacuation of the main groups (14a), to secure one end (58a) of the supplied product column (18a-f).

4. Separating device according to one of the preceding claims, **characterized by** a feed unit (34a), which is designed to feed the supplied product column (18a) in a feed direction (38a) which is angled downward in relation to a horizontal (36a).

5. Separating device according to one of Claims 1 to 3, **characterized by** a feed unit (34a), which is designed to feed the supplied product column (18a) in a feed direction (38a) which is angled upward in relation to a horizontal (36a).

6. Separating device according to one of the preceding claims, **characterized by** at least one separating element (40a) and a group brace (42a), between which the main groups (14a) and/or subgroups (44a) are formed.

7. Separating device according to Claim 6, **characterized in that** a main group length (60a) and/or a subgroup length (62a) are/is determined by distances (46a) between separating elements (40a) and/or between the separating element (40a) and the group brace (42a).

8. Packing machine having a separating device (10a) according to one of the preceding claims.

9. Method for forming main groups (14a) from a product column (18a) with a separating device (10a) according to one of the preceding claims.

## Revendications

1. Dispositif de séparation avec au moins une unité de portionnement (12a), qui est prévue pour espacer des groupes principaux (14a) hors d'au moins une colonne de produits (18a) amenée en un mouvement d'amenée continu (16a) et formée de produits individuels qui se touchent et pour former les groupes principaux (14a) hors de ladite au moins une colonne de produits amenée (18a) par une accélération au moins essentiellement dans la direction du mouvement d'amenée (16a), dans lequel l'unité de portionnement (12a) est prévue pour retourner dans une position initiale (20a) en vue de la formation du prochain groupe principal (14a), pendant que ladite au moins une colonne de produits (18a) est amenée dans une direction d'amenée (16a), **caractérisé par** une unité de dépôt (22a), qui est prévue pour évacuer les groupes principaux (14a) dans un mouvement d'évacuation (24a) avec une composante de mouvement (26a) au moins essentiellement transversale au mouvement d'amenée (16a), dans lequel l'unité de dépôt (22a) est réalisée en forme de pale, sur laquelle le groupe principal (14a) repose, dans lequel l'unité de dépôt (22a) est réalisée en forme de pale en deux parties et peut être ouverte sur un côté inférieur.

2. Dispositif de séparation selon la revendication 1, **caractérisé en ce que** l'unité de portionnement (12a) est prévue pour au moins essentiellement arrêter les groupes principaux (14a) avant le début du mouvement d'évacuation (24a).

3. Dispositif de séparation selon l'une quelconque des revendications précédentes, **caractérisé par** au moins un moyen de retenue de colonne de produits (32a) pouvant être synchronisé avec le mouvement d'amenée (16a), qui est prévu pour bloquer une extrémité (58a) de la colonne de produits amenée (18a-f) au moins pendant l'espacement et/ou l'évacuation des groupes principaux (14a).

4. Dispositif de séparation selon l'une quelconque des revendications précédentes, **caractérisé par** une unité d'amenée (34a), qui est prévue pour amener la colonne de produits amenée (18a) dans une direction d'amenée (38a) inclinée vers le bas par rapport à une horizontale (36a).

5. Dispositif de séparation selon l'une quelconque des revendications 1 à 3, **caractérisé par** une unité d'amenée (34a), qui est prévue pour amener la colonne de produits amenée (18a) dans une direction d'amenée (38a) inclinée vers le haut par rapport à une horizontale (36a).

6. Dispositif de séparation selon l'une quelconque des revendications précédentes, **caractérisé par** au moins un élément de séparation (40a) et un moyen de retenue de groupe (42a), entre lesquels on forme les groupes principaux (14a) et/ou des groupes partiels (44a).

7. Dispositif de séparation selon la revendication 6, **caractérisé en ce que** l'on détermine une longueur de groupe principal (60a) et/ou une longueur de groupe partiel (62a) par l'intermédiaire de distances (46a) entre des éléments de séparation (40a) et/ou entre l'élément de séparation (40a) et le moyen de retenue de groupe (42a).

8. Machine d'emballage avec un dispositif de séparation (10a) selon l'une quelconque des revendications précédentes.

9. Procédé de formation de groupes principaux (14a) hors d'une colonne de produits (18a) avec un dispositif de séparation (10a) selon l'une quelconque des revendications précédentes.
